# EUROPEAN PATENT APPLICATION

(11) **EP 4 017 218 A1**
(43) Date of publication of application: **22.06.2022**
(21) Application number: 20214702.1
(22) Date of filing: 16.12.2020
(51) Int. Cl.: H05B 6/64, H05B 6/68, H05B 6/70

(54) **METHOD FOR DIELECTRICALLY HEATING A COMESTIBLE OBJECT, APPLIANCE, AND COMPUTER-PROGRAM PRODUCT**

(71) Applicant: ELECTROLUX APPLIANCES AKTIEBOLAG, 105 45 Stockholm (SE)
(72) Inventor: TASSAN MANGINA, Franco, 33170 Pordenone (IT); MORASSUT, Alessandro, 33170 Pordenone (IT); PERISSINOTTO, Eros, Susegana (IT)
(74) Representative: Electrolux Group Patents

(57) **Abstract**

The underlying invention in particular is directed to a method for dielectrically heating a comestible object (5) placed in a cavity (4) of an appliance (1), comprising the steps of heating (301) the comestible object (5) by irradiating the cavity (4) with radiation in the radio-frequency or microwave range until a first temperature value (T1) in a given first region (R1) of the comestible object (5) reaches a predetermined first temperature limit (TL) that is smaller than a first target temperature (TT); and, subsequently, heating (302) the comestible object (5) with radiation in the radio-frequency or microwave range generated, wherein at least one heating parameter is controlled at least in dependence of a first temperature difference (TD) calculated between the first target temperature (TT) and the measured first temperature value (T1); and suspending or stopping (303) the heating (302) if the first temperature difference (TD) is equal to or smaller than a predefined first temperature threshold (TH) .

## Description

The present invention relates to a method for dielectrically heating a comestible object, such as a food product, an appliance, and a computer-program product.

Heating comestible objects, such as food products, with radiation in the microwave range, e.g. with electromagnetic radiation in the frequency range from 300 MHz to 300 GHz, such as around 2.45 GHz commonly used in known microwave ovens, is widely known, either by using microwave radiation alone or in combination with other heating techniques such as radiant heating, steam heating and others. Exemplary reference is made to EP 3 451 794 A1 describing a combined microwave and radiant cooking device, wherein radiant heat may be used for browning or grilling.

Whereas in conventional cooking procedures using radiant heat or steam it is comparatively easy, for example by monitoring the ambient temperature in the cavity of the cooking oven, to obtain an appropriate surface browning or doneness, the use of microwave energy, for example when roasting a piece meat, tends to overheat the surface, which is at least in part due the limited penetration depth of microwaves causing uneven heating patterns. In particular, the microwave energy radiated at the object is mainly absorbed in surface-near layers, while deeper layers of the object are heated to a lesser extent.

Further, for the reason that the microwave radiation used for cooking is directly absorbed by the food product substantially without interaction with air surrounding the food product, unlike with radiant heating involving for example cavity temperatures of 180°C or more, the ambient temperature within the cavity during microwave heating is of very limited use for predicting a residual cooking times or the level of doneness, for example.

It is therefore an object of the present invention do overcome the drawbacks of known methods for heating food products using electromagnetic waves such as microwaves. In particular it is an object of the invention to provide a method, an appliance, and a computer program product that provide improvements for dielectrically heating comestible objects, such as food objects, with high frequency radiation in the radio-frequency or microwave range, in particular with regard to the avoidance of overheated regions, such as overheated surface regions, of the object, and with regard to facilitating cooking time and/or doneness prediction.

This object is solved in accordance with the invention by a method, an apparatus, and a computer-program product according to the independent claims. Embodiments of the invention in particular result from the dependent claims and the below description.

According to an embodiment, a method for dielectrically heating a comestible object (hereinafter also referred to as "object") placed in a cavity of an appliance, in particular a household appliance, such as a cooking or baking appliance, is provided. Heating the object by dielectric heating shall be understood to comprise heating by using electromagnetic radiation in the radio-frequency or microwave range, in particular in the microwave range. The radio-frequency range in particular is understood to cover frequencies from 1 MHz to 300 MHz. The microwave range shall be understood to cover frequencies in the range between 300 MHz and about 300 GHz.

As will become clear from the below description, the term "comestible object" may relate to a single comestible item, such as a food product, but may also relate to two or more comestible items, to be heated together in the cavity of the appliance, in particular to different target temperatures, for example. In case of two or more comestible items, the heating procedure or scheme as described herein may jointly be applied to all of the comestible items. However, it is also possible to selectively apply the heating procedure or scheme, respectively, and in particular concurrently, to two or more of the comestible items, e.g. for heating the items to different target temperatures. In particular, the suggested heating procedure may be applied to a single one or to two or more comestible items whilst still obtaining the object underlying the invention. The possibility of individually or selectively heating a particular comestible item in case that several comestible items are placed within the cavity may for example be implemented by providing several radiation sources for dielectric heating, for example based on solid state technology known in the art. Two or several comestible items may for example be related to a complex dish, such as a breakfast, a meal of midday, or a dinner.

In general, an appliance according to the invention may be implemented for heating an object based solely on electromagnetic radiation as indicated. However, a corresponding appliance may be implemented as a multi-functional heating appliance comprising, in addition to one or more electromagnetic radiation sources, further heating sources such as inductive heating sources, radiant heating sources, infrared heating sources, steam hating sources, convection heating sources and others. Correspondingly, the method and related embodiments as suggested herein may be combined with heating cycles carried out based on one or more of the mentioned further heating sources. Corresponding heating procedures may be carried out successively.

The term "heating" shall in particular be understood as heating the object from an initial temperature (e.g. corresponding to a frozen state, a semi-frozen state, a thawed or defrosted state, or to a tempered state corresponding for example to room-temperature) to a target temperature. The target temperature may relate to a final temperature, to an intermediate temperature, or to a minimum temperature to be obtained after a heating, in particular cooking, process, such as a single or multi-stage heating process. The requirement of obtaining a minimum temperature, for example prevailing throughout the whole volume of the object, e.g. also in the core and not only in surface-near regions, may for example be driven by microbiological requirements recommending a lower temperature threshold of for example about 75°C for poultry.

In embodiments, the method comprises a (first) step heating the comestible object, in particular as a whole or at least on part, by irradiating the cavity with radiation in the radio-frequency or microwave range generated by one or more radiation sources. The heating is carried out, i.e. continued, until a first temperature value measured at or in a given first region of the comestible object, for example an outer surface layer or a surface-near layer of the object, reaches a predetermined first temperature limit. The first temperature limit is smaller than a target temperature associated with the first region. The target temperature may be understood as discussed above.

The heating in the (first) step may in particular comprise heating the whole object or only particular parts or items thereof by selective heating. The expression "a first temperature value" shall be understood as meaning either only a single first temperature, or two or more first temperatures. Having two or more first temperatures may for example relate to a situation in which different parts or items of the object shall be, e.g. selectively, heated to different target temperatures, or to situations where different first temperature limits are defined for different parts or items of the object. In this case, the heating according to the described (first) step may be carried out for each of the parts, in particular at least in part simultaneously or least in part successively. A corresponding heating scheme may be suitable for heating, in particular cooking, complex dishes, such as for example a breakfast etc. including several different food products such as egg, ham, milk etc..

The first temperature limit may for example be selected such that undesired degradation of the consistency of the object in the first region, e.g. a burnt surface of the object, may be avoided. The issue of undesired degradation may for example emerge if the heating of the object, in particular the first region, is continued until the target temperature is reached without changing the heating parameters of the one or more radiation sources. Further, the first temperature limit may be selected such that uneven heating of the object may be prevented. For example, the first temperature limit may be selected such that situations leading to a burnt surface, rather than a crispy crust, while the core is still uncooked, may be avoided, by continuing the heating with amended hating parameters of the one or more radiation sources as described below in connection with the next step of the suggested method.

As indicated, the suggested method comprises a subsequent (second) step that is carried out if the condition set forth in the preceding (first) method step is met, i.e. that the first temperature value reaches the first temperature limit.

The term "reaching" in connection with the first temperature limit may for example relate to a determination by comparing the measured first temperature value with the first temperature limit, executed for example by a corresponding controller or control unit of the appliance, that the first temperature value is equal to or exceeds the first temperature limit. The first temperature value may for example be continuously measured and monitored against the first temperature limit. For example, in response to a first-time determination that the before-mentioned condition is met, the method involves proceeding further with the subsequent (second) step, wherein the controller or control unit may control the appliance, in particular the radiation source(s) accordingly.

The subsequent (second) step comprises heating the comestible object by irradiating the cavity with radiation in the radio-frequency or microwave range generated by the one or more radiation sources, wherein at least one heating parameter of the one or more radiation sources, in particular the heating power, is set, in particular controlled or adapted, at least in dependence of, in particular as function of, a first temperature difference calculated between the first target temperature and the measured first temperature value.

It shall be noted that the terms as used herein in connection with "temperature" in combination with an additional attribute, e.g. temperature value, temperature limit etc. relate to temperatures, or as applicable to temperature differences, with the term "temperature" to be understood in the ordinary sense. In addition, the attributes "first" and "second" as used herein in particular are intended for distinguishing, and clarifying interrelationships between respective "temperatures" and method steps or phases of a corresponding heating control. The attributes in particular are chosen for consistency and clarity for providing clear correlation between the terms used.

The expression "at least in dependence of" in particular shall mean, that the at least one heating parameter, relating for example to an operational parameter of the one or more radiation sources affecting the heating, is controlled, in particular amended or changed, with the first temperature difference being used as an input or control parameter, for example, associated with a corresponding control operation or control scheme for controlling the heating parameter, such as the heating power. Further, the expression "in dependence of" may involve controlling the heating parameter as a function of the first temperature difference, wherein the term "function" may relate to a mathematical function. The expression "in dependence of" may also involve a mapping or similar, involving for example a mapping table or a particular rule, such as a mathematical rule, provided for execution by a controller or control unit of the appliance. For example the heating power as one of the at least one heating parameter, may be controlled in dependence of the first temperature difference such that the heating power is the lower the smaller the first temperature difference is. By this, overheating and undue degradation of for example the surface of a heated, in particular cooked, object, such as a chunk of meat, may be greatly avoided. Overheating of regions other than the surface may be avoided, if such regions are selected as the first region in the sense of the invention.

As implied by the described subsequent (second) step, the method may involve controlling at least one heating parameter, which shall mean that the control is not necessarily restricted to a single heating parameter. Regarding the radiation source or sources, the heating parameter may for example relate to one of the frequency, the phase, the amplitude, the output power of the radiation source and others.

The suggested method involves the further (third) step of suspending or stopping the heating, i.e. irradiating the cavity with the radiation, according to the (second) step as described beforehand, if the first temperature difference is equal to or smaller than a predefined first temperature threshold. The "if" condition in this (third) step may for example relate to a determination made by a controller or control unit operative to compare the measured first temperature difference with the predefined first temperature threshold.

The method may involve in the third step stopping the heating, for example if the predetermined first temperature threshold is associated with a final target temperature to be obtained. The method may involve in the third step suspending the heating, for example if the temperature threshold is associated with an intermediate or interim first target temperature. Further, suspending the heating may be applied if the method involves a temperature equilibration step subsequent to the first and second heating steps, followed by continuing the heating in accordance with the first and subsequent second heating steps of the suggested method, or only with the second heating step as described beforehand.

Suspending the heating may involve a waiting time, e.g. for temperature equilibration, before further heating is resumed or executed. The first and second method step, or the second method step alone, may be carried out repeatedly, for example with one or more suspensions of the heating, until a final condition is met. Such a final condition may for example relate to a situation in which the first temperature value is substantially stable, or in which the temperature drift after suspending the heating and before resuming the heating according to the first and second step or according to the second step is below a given threshold.

The first temperature threshold of the third step of the suggested method may for example be defined by a temperature interval relative to an intermediate or a target temperature. Such an interval may for example be centered around the target temperature, or the target temperature may define an upper limit of the interval, such as [Tₜ-dT; Tₜ] or [Tₜ-dT; Tₜ+dT] in which Tₜ represents the target temperature and dT represents an increment, selected for example from the range of 0°C to 5°C. In particular, embodiments, the first temperature threshold may correspond to the target temperature as such, i.e. involve an increment of Zero. In this case, the third step may involve comparing the measured first temperature value against the target temperature, and if it is determined that the measured first temperature value has reached the target temperature the heating may be stopped or suspended.

In general, the third step may involve, by a controller or control unit, monitoring, in particular continuously monitoring, the first temperature difference, which, by the way, is available and determined in connection with the second step, against the first temperature threshold, and determining whether the condition set forth in the third step is met. If the condition is met, the heating is suspended or stopped, If the condition is not met, the heating according to the second step is not suspended or stopped, i.e. the heating according to the second step is continued, in particular until the condition is met.

As can be seen, the suggested method is suitable for avoiding the drawbacks mentioned in the introductory part I connection with the heating methods known from the state of the art, and in particular is suitable for avoiding unwanted heating-induced degradation of the monitored and heated first region of the comestible object, such as, but not limited to the surface of the object. Further, the suggested method is suitable for obtaining uniform heating results over the volume of the object, in particular as far as monitored. For example the suggested method is suitable for avoiding heating and cooling results in which the surface of the object is overheated while the core of the object is still uncooked, which may for example occur with dielectric heating or cooking of chunks of meat or similar volumetric objects, in particular also objects involving layers or regions of different inner and/or outer consistency or texture requiring specific heating modes, respectively.

In embodiments and as already indicated, the first temperature value may correspond to a surface temperature of the object. Correspondingly, the given first region may correspond to a surface, a surface layer, or a layer or section of the object that includes a section of the outer surface or outer surface layer. The surface temperature may for example be measured at one or more particular surface positions. For example, contact temperature probes or sensors may be used for measuring the surface temperature at one or more surface positions. Further, the surface temperature may relate to a surface area of the object, for example if the first temperature value is measured by a contactless temperature probe, such as an infrared temperature probe.

As mentioned, the suggested method is not restricted to the surface or surface layers of the object. Accordingly, the first temperature value may correspond in particular applications to a core temperature of the object measured in the core of the object, or to an intermediate temperature of a region of the object located between the surface and the core of the object. Correspondingly, the first region may be selected to correspond to a core region or to an intermediate region, as well as to the surface or a surface layer. Selecting the first region as comprising the core or an intermediate region may for example be applied if the core or intermediate parts of the object are more heat-sensitive than the surface or regions closer to the surface. This may for example be the case if the core comprises a heat-sensitive filling surrounded by an outer wrap or similar.

Accordingly, the target temperature may be associated with a, in particular final, surface target temperature, a, in particular final, core target temperature, and a, in particular final, intermediate target temperature, respectively.

The term "core" shall be understood according to the ordinary meaning, in particular in the field of cooking, in the sense of relating to a region located at or in the center of the object, or a particular item of the object if the object comprises two or more items, for example.

By this, it is possible to heat selected regions that are e.g. sensitive to overheating, in a gentle way without causing undue degeneration in the selected region. In particular, by heating such regions in a gentle way by controlling a heating parameter, such as the heating power, in dependence of the temperature distance of the first temperature to the target temperature associated with the region in accordance with the second step of the suggested method may lead to improved overall heating or cooking results. As mentioned, selecting a core or intermediate region of the object may for example be considered if such a region is more sensitive to overheating than other surrounding regions.

In connection with dielectric microwave heating, the surface of chunk-shaped objects, such as meat chunks, are often prone to overheating due to the limited penetration depth of the radiation. The suggested method is in particular suitable for gently heating, in particular cooking, such objects without undue degeneration of the surface whilst obtaining sufficient heating or cooking in inner sections, e.g. the core, of the object.

In embodiments, if the heating in the third step is suspended, the second and third step, and if desired also the first step, may be reiterated. Such a reiteration may be carried out, for example if, after a given time period after suspending the heating, it is determined that the first temperature difference is larger than the first temperature threshold again. By this, gentle heating with the time-averaged first temperature value gradually converging towards the first target temperature may be obtained. In particular, the first target temperature may be obtained in a gentle manner whilst avoiding undue degradation, and whilst obtaining sufficient heating in other regions of the object.

In embodiments, the reiteration as referred to beforehand may be continued until one or more second temperature differences between one or more second temperature values measured in or at one or more two second regions of the object and one or more second target temperatures associated with the one or more second regions is equal to or smaller than one or more second temperature thresholds. As an example, if the first region is associated with the surface or a surface area of the object, a second region that is associated with the core or an intermediate region of the object may still be insufficiently heated, i.e. underdone, if the first target temperature reaches, for example for the first time the first temperature threshold. Specifically, if the method yields a first-time determination in the heating cycle that the first temperature difference is equal to or smaller than the first temperature threshold, the core or intermediate region may still be insufficiently heated, i.e. undone. In this situation, which may be identified by comparing or monitoring the second temperature value via a temperature sensor placed in the second region against the second temperature threshold, sustaining the heating based on a certain idle time may be used for temperature equalization between the sufficiently heated and still insufficiently heated regions. In particular overheating in the first region may be prevented through temperature dissipation to surrounding regions during the idle time. One or more reiterations may be applied depending on the overall temperature evolution or progression in the object. If all relevant or selected regions are sufficiently heated, which may be determined if the temperature in the monitored region(s) fulfils a selected stability criterion relative to the idle time, the reiteration may be stopped, and the heating as such may be stopped or terminated. The stability criterion may for example be associated with a maximal allowable temperature drift of the temperature values in the monitored regions over the idle time.

In embodiments, when reiterating a heating step, either the second heating step, the first heating step, or both, the at least one heating parameter of the one or more radiation sources maybe controlled further in dependence of at least one of the one or more second temperature differences. By this adequate gentle heating of the second regions up to respective target temperatures may be obtained.

In embodiments, and as already indicated, the one or more second temperature values may selected from the group comprising: surface temperature of the object, core temperature of the object, intermediate temperature of a region the object measured in a region located between the surface and the core of the object.

The second region associated with the second temperature value may be selected to be different from the first region. Accordingly, the regions may be associated with a surface region, the core, or an intermediate region of the object. Enabling such a substantially free selection of regions to be monitored with regard to temperature, flexible heating, in particular cooking, of a plurality of different kinds of objects, in particular food objects, is possible.

In embodiments, at least one of the one or more the second temperature values is measured deeper inside of the object as compared to the first temperature. Accordingly, the second region is located deeper in the volume of the object as compared to the first region. This corresponds to the situation in which the main focus for avoiding degradation lies on an outer region of the object, such as the surface.

Accordingly, and in embodiments, one of the one or more second temperatures may correspond to a core temperature of the object and the corresponding second target temperature corresponds to a core target temperature of the object. The same applies for intermediate regions. The second target temperature may, but need not be the same as the first target temperature. For example the second target temperature may be lower than the first target temperature, if, for example, the heating shall result in a certain level of undoneness in the second region, e.g. if the core of a chunks of meat shall, such as a steak, obtain a certain level of undoneness whilst the surface shall be well-done.

In embodiments, and as already discussed further above, the comestible object may comprise two or more comestible items. Further, in embodiments, the one or more radiation sources may be controlled in accordance with the first and second heating step of the suggested method for heating at least two of the items.

By this complex meals or dishes may, for example, be prepared, i.e. heated to a desired level or distribution of doneness.

In embodiments, the method for heating the comestible object, in particular for heating the comestible object from an initial temperature to a predetermined target temperature that is larger than the initial temperature, may comprise the following steps:
a. irradiating the cavity comprising the comestible object with the radiation in the radio-frequency or microwave range generated by the one or more radiation sources;
b. measuring and monitoring the first temperature value;
c. determining whether the first temperature value is below, or is equal to or larger than the predetermined first temperature limit; wherein
d. if it is determined that the first temperature value is below the predetermined first temperature limit, repeating steps a) to c), and
e. if it is determined that the first temperature value is equal to or larger than the predetermined first temperature limit:
f. determining and monitoring the first temperature difference; wherein:
   f1) if it is determined in step f) that the first temperature difference is larger than the predetermined first temperature threshold, which may, as discussed, be associated with a first target temperature, heating the comestible object according to the second step of the suggested method, i.e. controlling the at least one heating parameter at least in dependence of the first temperature difference; and
   f2) if it is determined in step f) that the first temperature difference is smaller or equal to the predetermined first temperature threshold, proceeding with the third step of the suggested method, i.e. suspending or stopping the heating.

The steps a to f, including f1) and f2) may be carried out by one or more controllers or control units of the appliance, in particular in an automated manner, wherein the controller(s) or control unit(s) may:
- control the one or more radiation sources to emit the desired radiation;
- execute and control the temperature measurements, in particular based on measurement signals of one or more temperature measurement units;
- determine and monitor temperature values and temperature differences, in particular in a continuous way, by comparing the measured temperature values to respective temperature limits;
- determine particular conditions such as defined in step e, and f1), and f2) based for example on monitoring or comparison results.

In particular, the given method steps a to f and f1) and f2) provide a particular solution for heating or cooking a comestible object, in particular in an automated manner, in accordance with the first to third step such that favourable heating and cooking results as described in connection with the inventive method may be obtained. In particular, undue heating-induced degradation of the heated object and regions thereof may be avoided, and appropriate results with regard to the level of doneness of the object and object regions may be obtained.

In embodiments, the method may further comprise adapting one or more operational parameters, comprising but not limited to heating parameters, of at least one of the one or more radiation sources. In this connection, the method may involve adapting, e.g. selectively adapting, a single radiation source or two or more radiation sources. The operational parameter(s) of the radiation sources may be adapted in a same or similar manner for two or more radiation sources. Further, it is also possible to adapt the operational parameter(s) selectively, i.e. to selectively and separately adapt, in particular in an independent manner, the operational parameter(s) of the radiation sources. Yet further, the types of operational parameter, e.g. frequency, phase, amplitude, emitted power, may be adapted for all of the radiation sources or they may be adapted selectively for the radiation sources. In particular, the adaptation may involve the same type(s) of operational parameters for all or some of the radiation sources, or the adaptation may involve, at least partially, selectively or individually adapting operational parameters of different radiation sources. By this, great flexibility in adapting the heating to the requirements of the object within the possibilities and boundary conditions provided by the object, the cavity, and the appliance as such may be obtained. In turn, the method may provide a wide range for controlling the heating to obtain the advantageous effects of the suggested method discussed further above.

In embodiments, the one or more operational parameters may be selected from, without being limited to, the group comprising: the impedance of the radiation source, the frequency of the radiation emitted by the source, the phase of the radiation emitted by the source, the amplitude of the radiation emitted by the source.

In embodiments, adapting the one or more operational parameters may be carried out such that the amount of power absorbed in the cavity relative to the radiation supplied to the cavity is maximized while minimizing the amount of power reflected back from the cavity. Such an adaptation may be based on a frequency, phase, amplitude, and/or impedance sweep. Examples thereof are given further below. It is to be noted that adapting the operational parameters for maximizing the amount power absorbed may be performed for each of the first and second heating step of the suggested method. Further, such an adaptation may be carried out, at least to a certain extent, independently and separately from the adaptation of the heating parameter referred to in the second step of the suggested method. For example, adapting the operational parameters, for example for optimizing or tuning the radiation source for minimizing the reflected power, for improving the energy efficiency, may be carried out as a kind of setup procedure before starting the heating in each of the first and second heating steps of the suggested method. Such optimizing and tuning steps may be carried out repeatedly during the whole heating procedure, in particular during the first and second heating steps of the suggested method. Performing such tuning steps may involve pausing the heating performed in the first or second step, and resuming the heating after tuning. By this, energy efficient operation of the radiation sources may be obtained and possible damages of the radiation sources due to high amounts of reflected power may be avoided.

In embodiments, the operational parameters may be adapted to yield minimal reflection and maximal absorption, wherein the heating parameter, such as the heating power of radiation supplied to the cavity for heating the object, may still and independently be controlled in dependence of the first temperature difference according to the second step of the suggested method.

In embodiments, the one or more operational parameters may be adapted such that the maximum of power absorbed in the cavity relative to the radiation supplied to the cavity exceeds a predefined absorption threshold. By applying such a threshold, which may for example set to 20% of the total power supplied, conditions with highly energy inefficient operation of the radiation sources may be avoided. For example, if the maximum power absorbed is less than 20% or even lower, the object may still be heated, however with unreasonable power consumption and the risk of damaging the radiation source(s). In this case, the radiation sources may be prevented from heating the object according to any of the first and second step of the suggested method.

In embodiments, the method may comprise performing a frequency, phase, and/or amplitude sweep, and/or an impedance sweep for the cavity. Such a frequency, phase and/or amplitude, and/or an impedance sweep may be carried out, as mentioned beforehand, to tune the radiation source(s) for optimizing absorption while minimizing reflection.

Such a sweep or such sweeps may comprise a step of supplying radiation to the cavity with at least one of the one or more operational parameters of the one or more radiation sources being varied over time within a respectively selected, e.g. a predetermined, sweep range. The operational parameter may be selected from the group comprising: frequency, phase, amplitude, impedance.

The sweep may further comprise a step of continuously measuring, or determining, the amount of energy or power supplied to and reflected back from the cavity over the sweep range.

A further step in the sweep operation may comprise determining, for the at least one operational parameter that is varied within the associated sweep range over time, an associated operational parameter value within the sweep range for which the power absorbed is maximized, or for which the maximum power absorbed exceeds a predefined absorption threshold;

A further step may comprise applying the determined at least one operational parameter value for heating the object in accordance with the first and/or second step of the method.

As already indicated a sweep may be carried out, in particular once, before starting the heating in the first and second step of the suggested method. Further one or more sweeps may be carried out throughout heating such that the radiation source is continuously or repeatedly tuned to the cavity and the object to yield maximum absorption. The sweep may be carried out for each of the radiation sources should the appliance comprise two or more radiation sources.

In embodiments, adapting, in particular tuning, the one or more operational parameters in connection with a sweep may be carried before the first step and/or the second step of the suggested method at a reduced power as compared to the power applied during the heating in the first and second step. By this, damages to the radiation source(s) due to high-energy reflections may be avoided.

In embodiments, the heating of the object, for example according to any of the first and second step, may be stopped if it is determined that the maximum of power absorbed in the cavity relative to the radiation supplied to the cavity is equal to or below the predefined absorption threshold. The situation in which the maximum absorbed power is below the absorption threshold is indicative of inefficient heating, and for example may be indicative appropriate doneness, justifying stopping the heating by stopping the supply of radiation.

In embodiments, the predetermined first temperature limit of the suggested method may be 60% to 90%, in particular 70% to 80% of the first target temperature. Therefore, in these embodiments, if it is determined that the first temperature value reaches a value of 60% to 90% of the first target temperature, the heating is continued by adjusting the heating parameter, e.g. the heating power, in dependence of the difference between the first target temperature and the first temperature vale. The first temperature limit may be selected or set depending on type, size, composition, etc. of the object or of a region of the object to be heated according the method suggested. Further, the first temperature limit may be selected, in particular set, in dependence of the type of heating, the intended result of the heating, the desired level of doneness etc..

In embodiments, the first and/or second temperature value(s) may be measured via one or more contact-type or contactless temperature sensor units. In particular, at least one temperature sensor unit may be utilized that comprises a temperature probe with two or more temperature sensor elements. The sensor elements may be arranged at predefined mutual distances along a rod. The rod may be configured for insertion into and/or for application in or on at least one comestible object.

For example, the temperature probe may be designed as a kind of hollow needle with two or more temperature sensor units being arranged within the hollow needle. The temperature sensor units may be arranged and distributed over the length of the hollow needle, for example at equidistant positions, wherein a temperature sensor unit may be provided at each longitudinal end of the needle or rod. By providing several temperature sensor units over the whole length of the needle, it is possible to concurrently measure or determine the surface temperature value, the core temperature value and intermediate temperature values as needed, provided that the temperature probe, i.e. the temperature sensor units, is adequately positioned.

The one or more temperature sensor units may be connected to a controller or control unit for example via a wire or wireless connection.

The one or more temperature sensor units may also be applied on the object, for example as a temperature probe placed in an outer package or envelope of the object.

In embodiments, the method may comprise measuring and monitoring the first temperature value while operating the one or more radiation sources for heating the object according to the first step of the suggested method; and controlling the heating in the first step in dependence of the measured first temperature value.

If it is determined by comparing the measured first temperature value with the first temperature limit that the first temperature value reaches the first temperature limit, the method of the given embodiment comprises operating the at least one radiation source for heating the object according to the second step of the suggested method.

The heating according to the second step may involve measuring the first temperature value, calculating the first temperature difference, and monitoring the first temperature difference, e.g. against the first temperature threshold, while heating the object according to second step.

If it is determined, based on the monitoring, that the first temperature difference is equal to or smaller than the predefined first temperature threshold, the heating applied according to the second step is suspended or stopped as set forth in the third step of the suggested method.

The identified steps involving measuring, determining, and monitoring temperature values and differences etc. may be carried out by a controller or control unit of the appliance and/or by a remote controller or controller connected to the appliance. By this, a heating scheme, in particular cooking scheme, may be carried out substantially in an automated or semi-automated manner.

In embodiments, the method may comprise heating the object, at least in sections during first step, with a constant output power of the one or more radiation sources. Nevertheless, other provisions for controlling the output power may be given.

In embodiments the method may comprise, at least in sections during the first step, measuring the first temperature vale and controlling the one or more radiation sources as a function of the measured first temperature value, in particular relative to the first temperature limit.

In embodiments, the method may comprise, during the second step, determining the first temperature difference, and controlling the one or more radiation sources as a function of the determined first temperature difference. Controlling the one or more radiation sources may comprise controlling the output power, e.g. the total value of the output power or the average output power, of the one or more radiation sources as a function of the first temperature difference. In embodiments, controlling the output power may be carried out such that the output power is the smaller, the smaller the first temperature difference. For example, the output power may be controlled based on a function that provides a direct relationship between the first temperature difference and the output power. As a non-limiting example, the output power may be controlled to be proportional to the absolute value of the first temperature difference, proportional to the ratio between the first temperature difference and the first target temperature and others. In particular, any suitable function that enables slowing sown the heating in the first region to avoid overheating may be used.

In embodiments an appliance is provided, such as a household appliance, for heating, in particular cooking, a comestible object, e.g. a food object. The appliance may be configured for heating the object in an automated or semi-automated manner.

The appliance may comprise a cavity for receiving the comestible object, at least one radiation source for supplying radiation in the radio-frequency or microwave range into the cavity for dielectric heating of the object, and at least one control unit coupled at least to the at least one radiation source, and configured at least for controlling the at least one radiation source in accordance with a method according to at least one embodiment according to the invention as described herein.

In particular, the at least one control unit may be configured, i.e. arranged, such that the appliance can be operated, under the control of the at least one control unit, to execute the steps of a method according to any embodiments of the invention as described herein.

For example, the appliance or the at least one control unit may comprise at least one associated electronic storage unit storing instructions, which, when executed for example by a processor of the control unit, cause the execution of a method according to any embodiment of the invention as described herein.

The at least one radiation source may be configured for generating and emitting radiation in the range of 1 MHz to 300 MHz, herein referred to as the radio-frequency range, and/or in the range of 300 MHz to 300 GHZ, herein referred to as the microwave range.

In an embodiment, the appliance may comprise one or more contact-type or contactless temperature sensor units.

In embodiments, at least one of the at least one control unit and the one or more temperature sensor units are or are configured for being interlinked for signal exchange, e.g. via a signal wire in case of a wire-bound connection. In particular, the control unit(s) may receive temperature values measured by one or more temperature sensors of the temperature sensor unit, and process the temperature values as needed. Specifically, the at least one control unit and the at least one temperature sensor unit may be configured for measuring and processing one or more temperature values of the comestible object at least during execution of the steps of any embodiment of a method according to the invention as described herein.

In embodiments, a computer-program product is provided, comprising instructions which, when executed by a computing device, e.g. a controller, a control unit, or a data processing unit of or associated with the appliance, cause the computing device to carry out the steps of a method according to any embodiment of the inventive method as described herein.

The computer-program product may for example comprise but not be limited to a, in particular non-volatile, storage medium storing the instructions, a processing unit adapted, when operating, to carry out respective instructions, and a signal sequence comprising the instructions.

The term computing device shall be understood broadly as a device or machine that can be instructed to carry out arithmetic and/or logical operations.

The advantages and advantageous effects of the method and the embodiments thereof as described herein apply mutatis mutandis also for the appliance and the computer-program product.

In all, the above description shows that the underlying objects of the invention are achieved.

Exemplary embodiments of the invention will now be described in connection with the annexed figures, in which:
- FIG. 1: shows a schematic and exemplary representation of an appliance configured for heating an object in accordance with a method according to any embodiment the invention as described herein;
- FIG. 2: shows a schematic wiring diagram for the appliance;
- FIG. 3: shows an exemplary process flow for heating an object;
- FIG. 4: shows an exemplary process flow for tuning one or more radiation sources;
- FIG. 5: shows operational steps according to an operational tuning mode for one or more radiation sources using an absorption threshold;
- FIG. 6: shows an illustrative plot of microwave radiation absorption versus frequency;
- FIG. 7: shows an exemplary plot including the microwave radiation supplied to the cavity, and the measured first temperature value versus time; and
- FIG. 8: shows a schematic scenario of heating an object, using a multi-sensor temperature probe for operational control.

Throughout the figures, the same reference signs are used for elements or components that are equal or equal in function or scope.

In general, the term heating as referred to in connection with the invention shall include cooking, for example of food products, wherein the terms heating and cooking shall be understood broadly in the sense of covering any known techniques for preparing a (food) object by heat exposure, including defrosting, baking, roasting, boiling, broiling, simmering etc.

Further, a comestible object, in particular food object, shall be understood as comprising any kind and combination of foodstuff, which, in the ordinary consumable state comprises liquid, solid and/or pasty constituents.

The underlying invention is related to heating a comestible object through exposure with radiation in the radio-frequency and/or microwave range. Heating an object using such radiation is also known as capacitive dielectric heating, which is based on shifting polarized ions or molecules, such as water, via the radiation thereby raising temperature. Capacitive dielectric radio-frequency heating may for example be obtained by using metal electrodes to form a kind of electric capacitor with the object to be heated being placed in the space between the electrodes. Dielectric microwave heating may be obtained by using magnetrons and/or solid state microwave generators and associated amplifiers, for example a high-power amplifier based on triode technique etc. generally known in the field.

The radiation source may be configured to supply radiation with a power in the range from 1 W to 2,000 W to the cavity.

Under ordinary conditions and depending, inter alia, on the type, the consistency, the volume, the size, the distribution etc. of the object or parts or items thereof, a specific resonance frequency exists, within a given and used frequency range, for which the amount of power absorbed by the object is maximal.

In embodiments, the method may comprise the following steps:
a) receiving the object in the treatment cavity of the appliance;
b) performing at least one impedance sweep within a predetermined impedance sweep range and/or at least one frequency, phase, and/or amplitude sweep within a predetermined frequency, phase and/or amplitude sweep range, wherein the predetermined sweep range is preferably centered about one or more predefined impedance, frequency, phase and/or amplitude values;
c) measuring the amount of energy or power that is supplied, via the at least one sweep to the cavity, and that is reflected back from the cavity over the entire sweep range;
d) based on the measuring, determining or selecting a frequency, phase, amplitude and/or impedance value for which the power supplied to the cavity is maximized while the power reflected back is minimized;
e) operating the radiation source according to the determination or selection;
f) optionally, repeating, at defined intervals of time, the steps b) to d), or b) to e).

If it is determined in step d) that a maximum power absorbed is larger than a predetermined absorption threshold, the method may proceed with step e). If it is, however, determined in step d) that the maximum power absorbed is equal to or less than the absorption threshold, the supply of radiation to the cavity or object may be stopped or suspended.

As an example, the absorption threshold may be 15 % to 25 %, in particular about 20 %, relative to the power supplied.

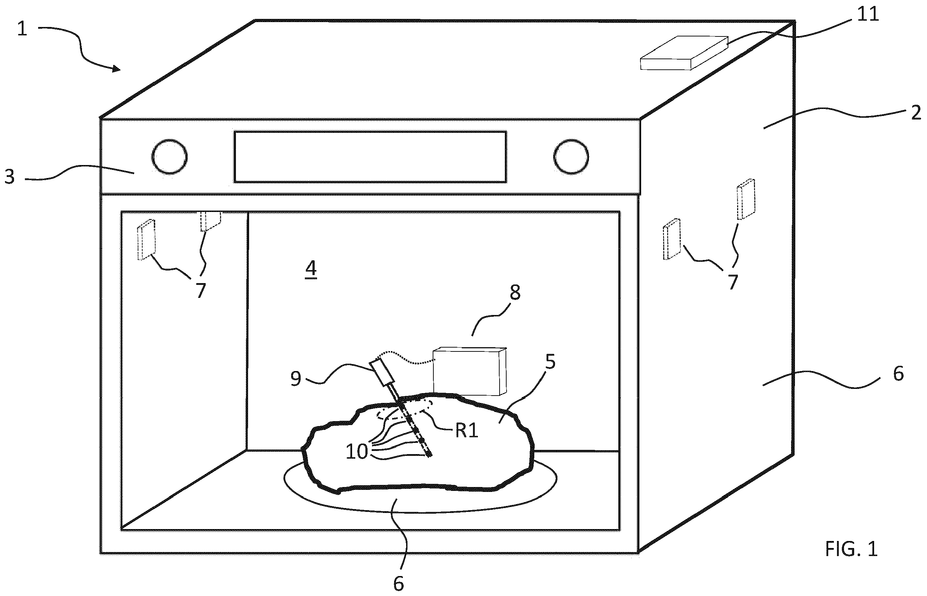

FIG. 1. shows a schematic and exemplary representation of an appliance 1 configured for heating, in particular cooking a comestible object in accordance with an embodiment of the method according to the invention. The components of the appliance 1 are shown and depicted at least in so far as necessary for understanding the underlying invention.

The appliance 1 may be a microwave oven, comprising heating elements for cooking or baking the object via radio-frequency and/or microwave radiation.

The appliance 1 comprises a support structure with an outer housing 2, and a user interface 3 with control elements for controlling the appliance 1.

The appliance 1 further comprises a cavity 4, which is configured for accommodating a comestible object 5, such as a chunk of meat, placed on a microwaveable cookware 6. The comestible object 5 is herein below also referred to as object 5.

The appliance 1 further comprises a door (not shown) associated with the front opening of the cavity 4, and configured for closing the cavity 4, and enabling access to the cavity interior in the opened state. Such cavity and door configurations are known in the art.

The appliance 1 further comprises several radiation sources 7 comprising radiation generators and one or more antennas for supplying the radiation into the cavity 4. The radiation sources may comprise one or more magnetrons and/or solid-state radiation generators, which are generally known in the art. In embodiments, the appliance may comprise only a single radiation source.

The appliance 1 further comprises a temperature measuring unit 8 configured for connecting to one or more temperature probes 9. The temperature probe 9 may comprise, as exemplarily shown in FIG. 1, a grip and a needle-like shaft for insertion into the object 5. Within the needle-like shaft, the temperature probe 9 comprises several temperature sensors 10, in the present case five temperature sensors, arranged along the shaft with mutually equal distances, wherein one of the temperature sensors 10 is arranged at the tip of the needle-like shaft, and one of the temperature sensors 10 is placed near the grip provided at the other end of the needle-like shaft. By appropriately inserting the temperature probe 9 into the object 5, the temperature measuring unit 8 may be able to measure a core temperature value of the object 5, a surface temperature value of the object 5, and several intermediate temperature values between the core and the surface of the object 5.

The temperature probe 9 is, in the present embodiment, connected to the temperature measuring unit 8, in particular a controller or data processing unit, via a cable. However, wireless solutions may be used.

The appliance 1 further comprises one or more control units 11, in particular data processing units, communicatively interconnected at least with the radiation sources 7, and with the temperature measuring unit 8.

The one or more control units 11 are configured to control the appliance 1, in particular the identified components, at least in the extent of a method described herein in connection any embodiments of the invention.

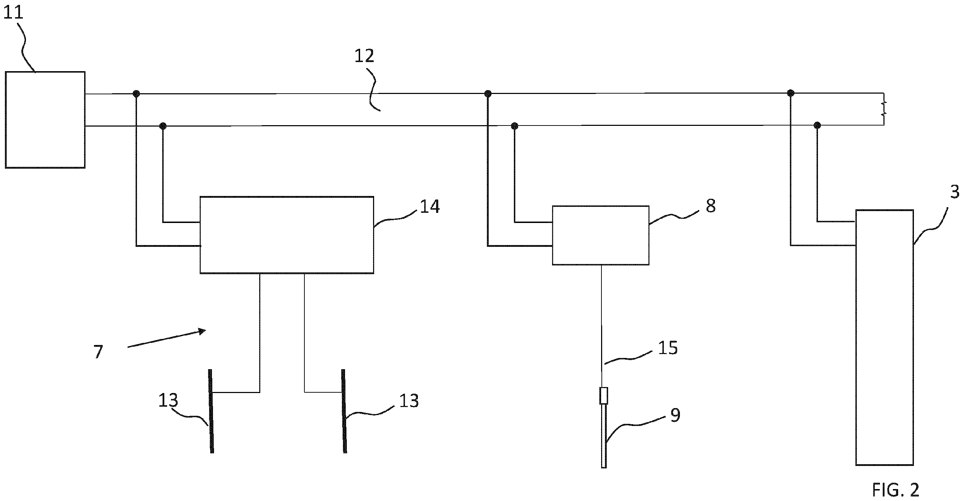

FIG. 2 shows a schematic wiring diagram for the electric and electronic components of the appliance 1 described above. The electric and electronic components, i.e. the radiation source 7, the temperature measuring unit 8, the temperature probe 9, the user interface 3 (and others), may be, either directly or indirectly, connected with the control unit 11, for example via a bus 12, and/or other suitable, e.g. separate, communication and control lines.

In the given example, the radiation source 7, comprising one or several antennas 13 connected to a generator 14, is connected to the bus 12 for control purposes and data transmission or exchange.

Further, the temperature measuring unit 8, which in turn is connected via cable 15 to the temperature probe 9, is also connected to the control unit 11 via the bus 12.

Yet further, the user interface 3, which may include for example one or more control elements and/or (touch) display elements, is connected to the control unit 11 via the bus 12.

It shall be noted that other interconnections as compared to those mentioned in connection with FIG. 2 may be contemplated within the framework of the invention.

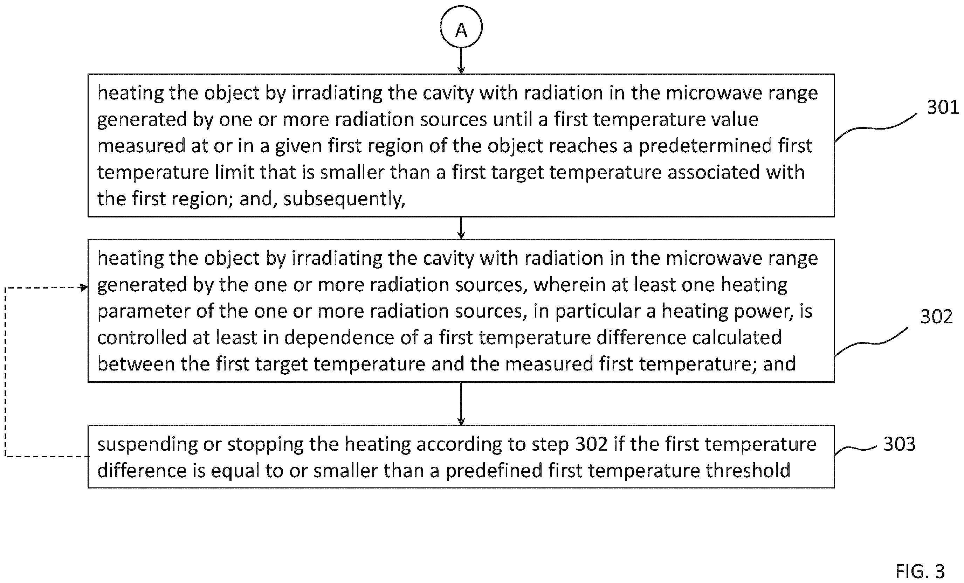

FIG. 3 shows an exemplary process flow for a method for heating a comestible object in accordance with an embodiment of the underlying invention.

The heating may be applied to a food object, such as a chunk of meat, or other kind of food objects having solid, liquid, and/or pasty consistence, for example.

As a note, encircled alphabetic characters in the figures including flow diagrams are provided to define links or branches between different embodiments.

Such a method may comprise a first step 301 comprising heating the object 5 by irradiating the cavity 4 with radiation for example in the microwave range generated by the one or more radiation sources 7 until a first temperature value T1 measured at or in a given first region R1 of the object 5 reaches a predetermined first temperature limit TL that is smaller than a first target temperature TT associated with the first region R1.

The first region is schematically indicated in FIG. 1 as being related to a surface region or layer of the object 5.

The method further comprises a subsequent second step 302 comprising heating the object 5 by irradiating the cavity 4 with radiation for example in the microwave range generated by the one or more radiation sources 7, wherein at least one heating parameter of the one or more radiation sources 7, such as the heating power, is controlled at least in dependence of a first temperature difference DT calculated between the first target temperature TT and the measured first temperature value.

The first target temperature TT and the first temperature value T1 are respectively associated with the first region R1.

The second heating step 302 is followed by a third step 303, comprising suspending or stopping the heating according to the second step 302 if the first temperature difference TD is equal to or smaller than a predefined first temperature threshold TH.

In the given example, the first temperature T1 corresponds to a surface temperature of the object 5 associated with a surface region R1 of the object 5. Other regions of the object may be considered as described further above.

By heating the object 5 in dependence of the first temperature difference TD in the second step 302 overheating of the surface area, in particular the first region R1, may be prevented.

Further, by using the temperature probe 9 including several temperature sensors 10 distributed over the length of the rod or needle of the probe, other sections, such as the core and intermediate regions of the object 5, may be monitored with regard to temperature, in particular doneness. In this regard, the heating or cooking of the object 5 may be carried out such that overheating in the first region, in the given example a surface region R1, may be avoided, while sufficient doneness in the core of the object 5 and/or in one or more intermediate regions may be obtained.

In embodiments, if it is determined by the control unit 11 and temperature measuring unit 8 that the condition defined in connection with the second step 302 is met, the control unit 11 may either stop the heating completely, or the control unit 11 may suspend the heating.

If for example, the control unit 11 determines, for example after a defined waiting period after suspending the heating according to the third step 303, that the first temperature difference TD raises above the first temperature threshold again, the control unit 11 may instruct the radiation source 7 to resume heating according to the second step 302. The control unit 11 may reiterate these steps until a final level of doneness is obtained, which may for example be determined if the first temperature difference TD remains below the first temperature threshold TH within the waiting time. The reiteration is indicated in FIG. 3 as a dashed arrow.

In order to obtain efficient heating, I particular efficient use of microwave power emitted by the radiation sources 7 into the cavity 4, the method may comprise steps for tuning the radiation sources 7 to the absorption resonance frequency of the load, i.e. the object 5 in the cavity 4, to maximize absorption. Tuning the radiation sources 7 may be carried out based on a sweep, such as a frequency, phase, and/or amplitude sweep, and/or an impedance sweep.

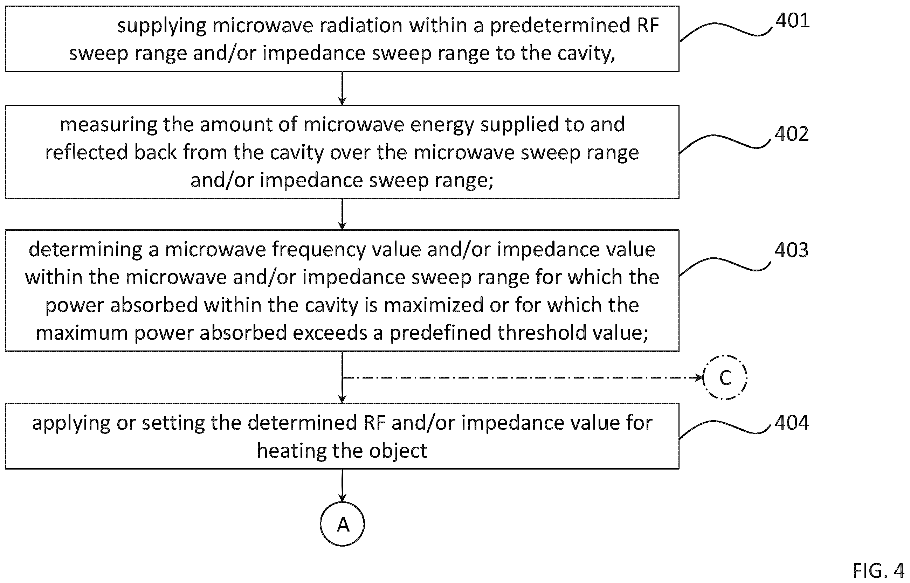

A flow diagram including corresponding method steps for tuning the radiation sources 7 is shown in FIG. 4, which will be described below.

A corresponding tuning may be based on a frequency sweep or impedance sweep over a given frequency sweep range or impedance sweep range to find the particular radio frequency or impedance associated with a maximum radiation absorption. Phase and/or amplitude sweeps may also be used.

In more details, the tuning steps, for example carried out with microwave radiation (but which will be the same if radio-frequency is used) may comprise:
- supplying 401 microwave radiation within a predetermined microwave frequency sweep range and/or impedance sweep range to the cavity 4,
- measuring 402 the amount of microwave energy supplied to and reflected back from the cavity over the microwave frequency sweep range and/or impedance sweep range;
- determining 403 a microwave frequency value and/or impedance value within the microwave frequency and/or impedance sweep range for which the microwave power absorbed within the cavity 4 is maximized, or for which the maximum power absorbed exceeds a predefined threshold value;
- applying 404 or setting the determined microwave frequency value and/or impedance value for heating the object.

As indicated in FIG. 4 by the encircled "A", the method steps 401 to 404 may be carried out at the beginning of the heating cycle, i.e. before the heating in the first step 301. The tuning according to steps 401 to 404 may further be carried out before the heating in the second step 302. In addition, one or more tuning steps may be carried out repeatedly, e.g. after predefined time-intervals, throughout the whole heating cycles according the fist and/or second steps 301 and 302, in particular in order to optimize heating and energy efficiency.

For measuring the microwave radiation that is reflected back from the cavity 4, i.e. that is not absorbed within the cavity 4, i.e. by the object 5, the appliance 1 may comprise a suitable sensor unit (not shown).

For evaluating and analysing the sensed reflection data, in particular in relation to the microwave energy or power supplied to the cavity 4, the appliance 1 may comprise a controller configured for carrying out such evaluations and analyses. Such a controller may also be configured for determining the microwave frequency value or impedance value according to step 403.

Further, such a controller, in particular the control unit 11, may instruct the generator 14 to supply microwave radiation in accordance with the determined microwave frequency value or impedance value. Corresponding controllers and their function(s) may be implemented, at least in part, with the one or more control units 11 exemplarily shown and discussed in connection with FIG. 1.

By repeatedly tuning the radiation sources 7, a more efficient use of microwave energy and better heating may be obtained.

According to step 403, the method as suggested may involve determining whether the maximum microwave power absorbed exceeds a predefined absorption threshold, which will be described in further detail below.

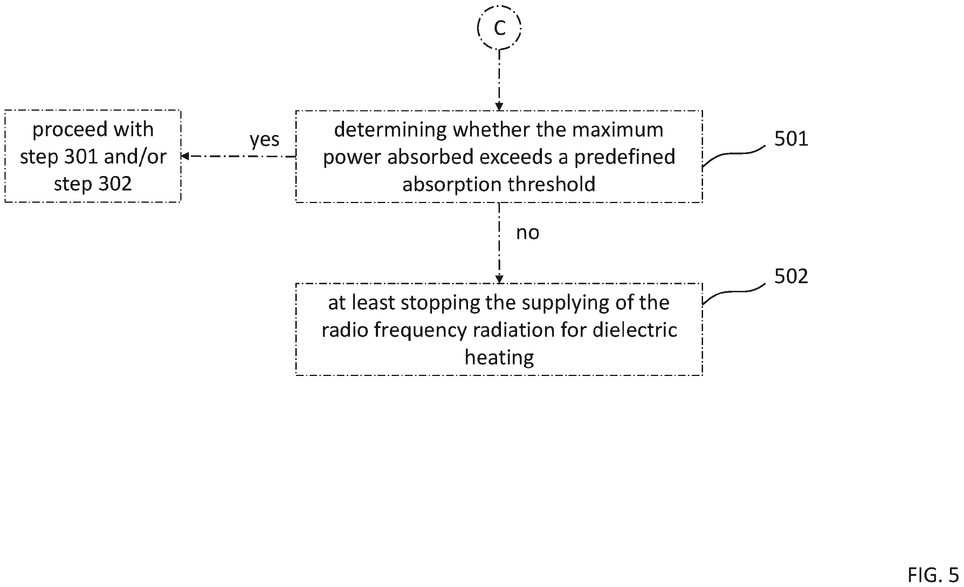

In case that a corresponding absorption threshold is used, the controller or the control unit 11, for example, may be configured to determine, for the sweep range used the maximum microwave power absorbed, and determine whether or not the determined maximum microwave power absorbed is larger, or is equal or less than the absorption threshold. Such an optional operation for tuning the one or more radiation sources 7 is indicated in FIG. 4 and FIG. 5, wherein interconnections and branching between the method steps are indicated by dashed-dotted lines and encircled letters. FIG. 5 shows additional (and optional) steps according to the operational variant using the absorption threshold.

If such an absorption threshold is used, the method according to FIG. 4 may branch off after step 403, and carry out step 501. Accordingly, the controller or control unit 11, for example, may determine, after having determined the maximum microwave power absorbed, whether the maximum microwave power absorbed exceeds, i.e. is larger than, the absorption threshold, or is equal or lower than the absorption threshold.

If it is determined that the maximum microwave power absorbed is larger than the absorption threshold ("yes" condition in FIG. 5), which is at least indicative of the possibility to continue microwave-based heating under reasonable absorption conditions, the method may proceed with heating the object 5 according to steps 301 and 302.

If it is, however, determined that the maximum microwave power absorbed is equal to or lower than the absorption threshold ("no" condition in FIG. 5), which is at least indicative that continuing microwave-based heating is not reasonable any more with regard to energy-efficiency, the method may at least stop supplying the microwave radiation for dielectric heating. This in particular means that heating under use of the microwave radiation is stopped.

The absorption threshold may be determined through experimentation, for example, and may, in embodiments, be specifically selected according to the type, structure, and consistency of the object 5, provided, for example, that the appliance 1 is configured to provide object-specific operation modes and/or is configured to determine respective object characteristics, e.g. in an automated manner and/or via instructions from the user interface 3 in response to a corresponding user input. The absorption threshold may for example be set such that radio-frequency or microwave-based heating is only continued or started if at least 20% of the energy or power supplied to the cavity is absorbed, e.g. if the maximum power absorbed is larger than 20% of the total power supplied.

In connection with the figures, the method is described only in connection with an object 5 consisting of a single item. However, the method according to the invention may be applied to objects comprising two or more items, e.g. food items, in particular of different kind or consistency. Selective heating may for example be applied by operating one or more of the radiation sources 7 so as to heat a particular part or portion of the cavity 4, wherein the radiation emitted by the one or more radiation sources 7 may be focused to such a particular part or portion of the cavity 4. As an example, if the radiation sources are implemented based on solid-state technology, the radiation emitted from the one or more radiation sources may be directed to the particular part or portion by beam shaping and beam forming, which is as such known in the field of high-power microwave radiation, such as radar technology.

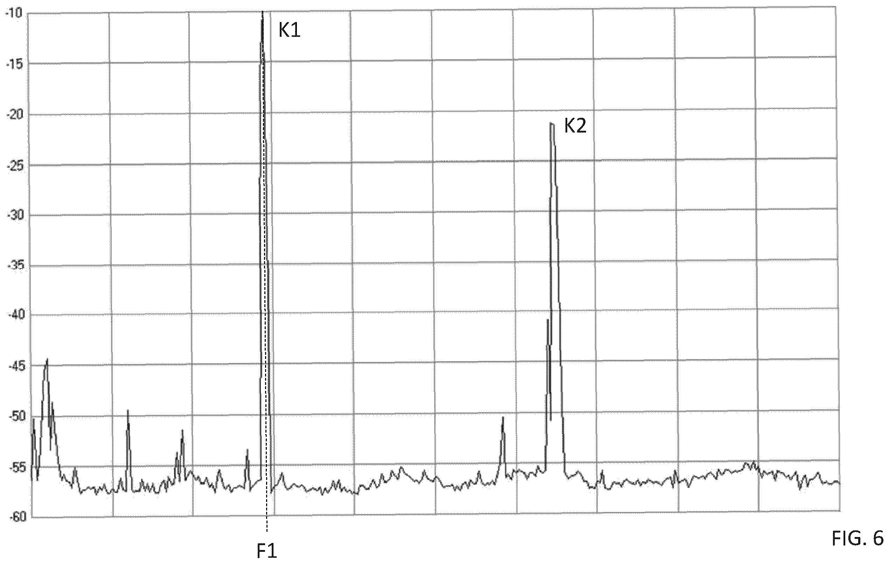

FIG. 6 shows an illustrative plot of microwave radiation absorption (vertical axis in decibel db) versus frequency (horizontal axis in Hz). The frequency range may for example be related to a particular frequency band, centered for example around a center frequency. For the intended illustrative purpose, it is not required to assign specific frequency values to the horizontal axis. The shown plot is illustrative for any frequency band, wherein the specific shape and peaks may vary. The frequency band may correspond to an ISM band, i.e. a frequency band reserved internationally for industrial, scientific, and medical (ISM) purposes. Such bands are known in the art, and may for example be located at 6.78 MHz with a bandwidth of 30 kHz, at 13.56 MHz with a bandwidth of 14 kHz, at 27.12 MHz with a bandwidth of 326 kHz, at 40.68 MHz with a bandwidth of 40 kHz (radio-frequency bands), and at 433.92 MHz with a bandwidth of 1.74 MHz, at 915 MHz with a bandwidth of 26 MHz, at 2.45 GHz with a bandwidth of 100 MHz, at 5.8 GHz with a bandwidth of 150 MHz, or at 24.125 GHz with a bandwidth of 250 MHz (microwave bands), for example. One or more of the radiation sources 7 may be configured for emitting radiation of a single band, or alternatively of two or more bands.

For identifying a suitable microwave frequency value according to step 403, the radiation source 7 is operated, for example, at a comparatively low power value, wherein the frequency value of the radiation emitted from the radiation source 7 and supplied to the cavity 4 containing the object 5 is swept over the given frequency band. Specifically, the frequency of the radiation emitted by the radiation source 7 is gradually or in steps varied and supplied to the cavity 4. Concurrently with sweeping the frequency value, the reflected energy or power is measured or detected. Based on the known energy or power of the radiation supplied to the cavity 4 and the measured or determined reflected energy or power, it is possible to determine the absorption or damping of the radiation caused by the load comprising the object 5 placed in the cavity 4.

The power absorbed may be expressed in decibel (db), which is well known in the art, wherein in the plot in FIG.6, negative decibel values are indicative of damping or absorption, wherein the smaller the absolute value of the negative decibel value, the higher the damping or absorption. Thus, high peaks in the plot of FIG. 6 are indicative of high absorption.

In the given example two comparatively high peaks exist, one with an associated decibel value of about -10 db (K1) and one with an associated decibel value of about -22 db (K2). In the illustrative example, the frequency value F1 associated with the peak K1 provides an operational mode for the radiation source 7 and for the given frequency band with a maximum power being absorbed. Accordingly, the heating process may be conducted by operating the radiation source 7 with the frequency value F1. For this, it is to be understood that the radiation source 7 is tunable in that the output frequencies can be varied over a given frequency band as illustrated.

Such a frequency sweep may be carried out repeatedly during heating the object to obtain maximum power yield.

For carrying out other type of sweeps, related for example to operational parameters such as the phase, the amplitude sweep or the impedance sweep, the operational parameter under consideration may be swept over the respectively given sweep range over time while leaving other operational parameters constant. For example, if an impedance sweep is carried out, the radiation source 7 may be operated at a fixed frequency value, and the impedance of the radiation source 7 may be varied over time, i.e. swept, within the given impedance sweep range. Again, the absorbed power may be monitored and the operational parameter under consideration corresponding to the maximum power absorbed may be set for operating the radiation source 7.

In order that the fixed frequency of the radiation source 7 ideally becomes the resonance frequency and thus provides maximal absorption in connection with an impedance sweep, the impedance of the radiation source 7 shall be matched to the impedance of the load. For this, a matching network on reactive lumped constants components may be provided for tuning, i.e. adapting, the impedance. Since the system has, at least approximately, a capacitive overall characteristic, an inductor may for example be used in the first instance to match the radiation source's impedance to obtain maximal absorption. Other suitable methods for tuning and matching the impedance of the radiation source 7 to the impedance of the load (the object 5 placed in the cavity 4) may be used, inter alia depending on the characteristics of the radiation generator 14, a corresponding amplifier, the cavity 4 and others.

In embodiments, in particular if several radiation sources 7 are used and concurrently operated for heating the object 5, in particular for heating one or more items of the object, tuning the operational parameters may involve tuning the frequency, the phase, the amplitude, and/or the impedance of the radiation sources.

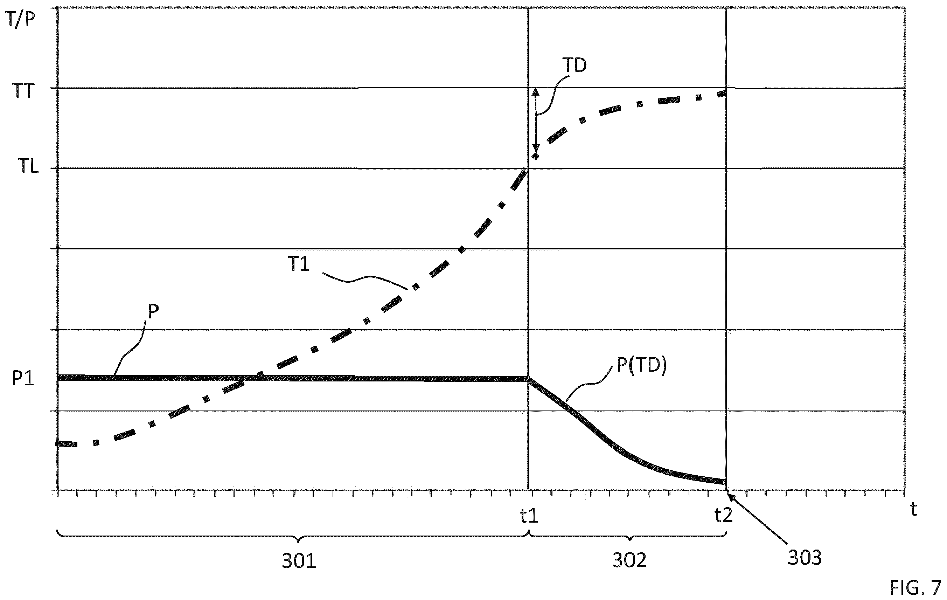

FIG. 7 shows, in connection with an exemplary embodiment, an exemplary plot of the microwave radiation supplied (solid line), and the measured first temperature value (dash-dotted line) versus time, in connection with heating of an object in accordance with the suggested method.

In a first heating step indicated by the curly bracket and reference sign 301, the object 5 is irradiated with microwave radiation having a constant power P1 over time. At the same time, the temperature in the first region R1 is measured as the first temperature value T1.

The heating using the constant power P1 is continued until it is determined, at time point t1, that the first temperature value T1 reaches the predetermined temperature limit TL, which may for example be 80°C with the target temperature TT being 100°C, for example.

After determining that the first temperature value T1 has reached the first temperature limit TL, the method proceeds according to the second step (indicated by the curly bracket in connection with reference sign 302) and heats the object 5 with one or more amended heating parameters for the radiation sources 7. An example for such a heating parameter is the heating power. The amendment of the hating parameter is carried out according to step 302 as described further above.

Assuming, for the purpose of example, that the heating power P is used as the heating parameter, the method proceeds, from time point t1 onwards, by heating the object 5 with a heating power P that is controlled as a function P(TD) of the temperature difference TD. The temperature difference TD is exemplarily visualized in FIG. 7 in connection with a time point located near t1.

From time point t1 onwards, the heating power P is controlled such that the heating power P decreases with decreasing temperature difference TD. At the time point t2, the first temperature value T1 reaches the first target temperature TT, and the supply of radiation, i.e. the heating, is stopped (step 303).

In the exemplary embodiment in FIG. 7, a temperature threshold TH for the first temperature difference TD is selected to be Zero. This means that the condition in step 303, according to which the heating is, as a general requirement, stopped or suspended, if the first temperature difference TD is equal to or smaller than the first temperature threshold TH, corresponds to the situation in which the first temperature value T1 reaches the first target temperature TT. If the first temperature difference TD reaches Zero, the first Temperature value T1 reaches the first target temperature TT. In case that the first temperature threshold TD is non-Zero, e.g. selected as 1°C, the heating is stopped or suspended, if it is determined that the first temperature threshold TD is equal to or smaller than the first heating threshold, in the given example equal to or smaller than 1°C. Using such a non-Zero first temperature threshold may be selected to appropriately consider the duty cycle associated with the temperature measurement of the first temperature value T1, in particular in case of non-continuous temperature measurements.

For example, from t1 ongoing, the power P applied to the load may be calculated as: P = P1*TD/[T], or in any other way such that the power P supplied is the smaller, the smaller the first temperature difference TD.

As another example, for controlling the heating power P could be: P(TD)=(TD*f)%*P, with f representing a fixed or variable factor. In an example, f may be provided as f = 10, and in this case a temperature difference of TD = 1°C results in P(TD)=10%*P, and a temperature difference pf TD = 5°C results in P(TD)=50%*P, etc.

Another methodology to calculate P(TD) could include Proportional Integral Derivative (PID) algorithms.

In FIG. 7, the first target temperature TT may for example be 100°C, and the first temperature limit TL may be 80°C, for example.

As can be seen in FIG. 7, heating the object 5 after the time point t1 is slowed down, thereby overheating the first region R1 may be avoided, in particular because the amount of energy supplied to and absorbed in the first region R1 may be reduced. At the same time, the other regions of the object are heated by the radiation supplied to the cavity 4, wherein the core and intermediate regions of the object 5 may be heated up to a respective target temperature under the regime as defined in the second step 302 of the method. Suspending the heating and resuming heating according to step 302 may be continued, for example, until the core or other regions of the object 5 reach respective second temperature limits, as far as such an operation is possible in view of the requirement according to the third step 303.

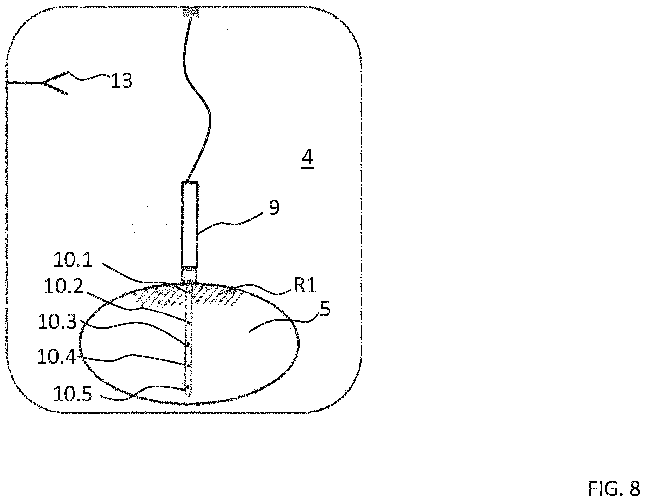

Fig. 8 shows a schematic scenario of heating an object 5 in a cavity 4, using a multi-sensor temperature probe 9 for operational control. The temperature probe 9 has, similar as the probe in FIG. 1, five temperature sensors indicated in FIG. 8 by reference signs 10.1 to 10.5.

The temperature sensor 10.1 is assigned to the first region R1, i.e. a surface region or layer of the object 5 to be monitored for avoiding overheating in accordance with the suggested method.

The temperature probe 9 is inserted into the object 5, wherein the temperature sensors 10.1 to 10.5 are placed at different regions of the object 5.

Temperature sensor 10.5 is located in a surface-near region on the opposite side of the object 5 with regard to the first region R1. Temperature sensor 10.3 is located approximately in the core of the object 5, and temperature sensors 10.2 and 10.4 are located in intermediate regions.

Using a control scheme as described in connection with FIG. 7, for example, the control unit 11 may determine the condition in which the temperature in the first region R1, measured by temperature sensor 10.1, reaches the first temperature limit TL, and change the heating parameter of one or more of the radiation sources 7 as suggested.

At the same time, the control unit 11 may monitor the temperature values measured by the other temperature sensors 10.2 to 10.5. Based on a temperature profile available through analysing the temperature values measured by the temperature sensors 10.1 to 10.5 of the temperature probe 9, the control unit may determine that the temperature sensor 10.5 is associated with a surface region, for example because sensor 10.5 measures similar temperature values as compared to sensor 10.1. Further, the surface-near temperature sensors 10.1 and 10.5 may be determined based on a priori knowledge on the dielectric heating process. In dielectric heating, outer surface regions tend to be heated, in the first instance and due to the limited penetration depth of for example microwaves, stronger than regions deeper in the volume of the of the object 5. By this, and in particular based on a temperature profile obtained by monitoring the measured temperature values over time, it is possible to distinguish between outer and inner regions of the object 5, and to assign the temperature sensors to respective regions.

As an example, the temperature sensor 10.3 may be determined as located in the core of the object 5 based on the fact that the temperature increase in the core takes the longer the closer the temperature sensor to the core. In this way, the assignment of the temperature sensors of the temperature probe 9 to particular regions of the object 5 may be carried out automatically. It is, however, also possible, that the assignment between the temperature sensors and the regions is, at least in part, defined based on a user input, or defined based on instructions for placing and inserting the temperature probe 9 into the object 5.

Based on the assignment of at least one of the temperature sensors, e.g. the temperature sensor 10.1 to the first region R1, the method as suggested herein may be carried out, wherein the object 5 may be heated whilst avoiding overheating of the assigned first region R1.

Further, by using a temperature probe having a plurality of temperature sensors, such as the temperature sensors 10.1 to 10.5, it is possible, based on analysing and monitoring the progression of the measured temperature values, to provide a comparatively precise estimation of the residual time. In particular the time still required for finishing the cooking process may be estimated, which may be used for automating the heating or cooking.

As can be seen, and as has been shown, the suggested method and appliance is effective in obtaining the underlying objects. In particular the method and any embodiments thereof are suitable for providing improved heating, as well as assistance and support for a user to heat an object, in particular food object, in which the object comprises regions prone to degradation in case of overheating, for example.

### List of reference numerals

- 1: appliance
- 2: outer housing
- 3: user interface
- 4: cavity
- 5: comestible object
- 6: cookware
- 7: radiation source
- 8: temperature measuring unit
- 9: temperature probe
- 10: temperature sensor
- 11: control unit
- 12: bus
- 13: antenna
- 14: generator

- 301 ff.: method steps
- 401 ff.: further method steps
- 501 ff.: further method steps

- T1: first temperature value;
- TL: first temperature limit
- TT: first target temperature
- TD: first temperature difference
- TH: first temperature threshold
- R1: first region
- F1: frequency value
- Kᵢ: peak
- P: power
- tᵢ: time point

## Claims

1. A Method for dielectrically heating a comestible object (5) placed in a cavity (4) of an appliance (1), in particular a household appliance, comprising the steps of:
i) heating (301) the comestible object (5) by irradiating the cavity (4) with radiation in the radio-frequency or microwave range generated by one or more radiation sources (7) until a first temperature value (T1) measured at or in a given first region (R1) of the comestible object (5) reaches a predetermined first temperature limit (TL) that is smaller than a first target temperature (TT) associated with the first region (R1); and, subsequently,
ii) heating (302) the comestible object (5) by irradiating the cavity (4) with radiation in the radio-frequency or microwave range generated by the one or more radiation sources (7), wherein at least one heating parameter of the one or more radiation sources (7), in particular a heating power (P), is controlled at least in dependence of a first temperature difference (TD) calculated between the first target temperature (TT) and the measured first temperature value (T1); and
iii) suspending or stopping (303) the heating (302) according to step ii) if the first temperature difference (TD) is equal to or smaller than a predefined first temperature threshold (TH).

2. The Method of claim 1, wherein the first temperature value (T1) corresponds to a surface temperature of the object (5), a core temperature of the object (5) measured in the core of the object (5), or to an intermediate temperature of a region of the object (5) located between the surface and the core of the object (5).

3. The Method of claim 1 or 2 wherein, if the heating in step iii) (303) is suspended, steps ii) (301) and iii) (302) are reiterated, in particular, if, after a given time period, it is determined that the first temperature difference (TD) is larger than the first temperature threshold (TH).

4. The Method of claim 3, wherein the reiteration is continued until one or more second temperature differences between one or more second temperature values measured in or at one or more second regions of the object (5) and one or more second target temperatures associated with the one or more second regions is equal to or smaller than one or more second temperature thresholds, wherein, optionally, when reiterating step ii), the at least one heating parameter (P) of the one or more radiation sources (7) is controlled further in dependence of at least one of the one or more second temperature differences, wherein, preferably, the one or more second temperature values are selected from the group comprising: surface temperature of the object (5), core temperature of the object (5), intermediate temperature of a region the object (5) measured in a region located between the surface (R1) and the core of the object (5).

5. The Method of claim 4, wherein, at least one of the one or more the second temperature values is measured deeper inside of the object (5) as compared to the first temperature value (T1), wherein one of the one or more second temperatures values preferably corresponds to a core temperature of the object (5) and the corresponding second target temperature corresponds to a core target temperature of the object (5).

6. The Method of any of claims 1 to 4, wherein the comestible object (5) comprises two or more comestible items, and wherein the one or more radiation sources (7) are controlled in accordance with steps i) (301) and ii) (302) for heating at least two of the items.

7. The Method of any of claims 1 to 6, comprising:
a. irradiating the cavity (4) comprising the comestible object (5) with the radiation in the radio-frequency or microwave range generated by the one or more radiation sources (7);
b. measuring and monitoring the first temperature value (T1) ;
c. determining whether the first temperature value (T1) is below, or is equal to or larger than the predetermined first temperature limit (TL); wherein
d. if it is determined that the first temperature value (T1) is below the predetermined first temperature limit (TL), repeating steps a) to c), and
e. if it is determined that the first temperature value (T1) is equal to or larger than the predetermined first temperature limit /TL):
f. determining and monitoring the first temperature difference (TD), wherein:
f1) if it is determined in step f) that the first temperature difference (TD) is larger than the predetermined first temperature threshold (TH), heating the comestible object (5) according to step ii) (302); and
f2) if it is determined in step f) that the first temperature difference (TD) is smaller or equal to the predetermined first temperature threshold (TH), proceeding with step iii) (303).

8. The Method according to any of claims 1 to 7, further comprising adapting (403) one or more operational parameters of at least one of the one or more radiation sources (7), wherein the one or more operational parameters are preferably selected from the group comprising: the impedance of the radiation source, the frequency (F) of the radiation emitted by the radiation source (7), the phase of the radiation emitted by the radiation source (7), the amplitude of the radiation emitted by the radiation source (7); such that the amount of power absorbed in the cavity (4) relative to the radiation supplied to the cavity (4) is maximized while minimizing the amount of power reflected back from the cavity (4) and/or such that the maximum of power absorbed in the cavity (4) relative to the radiation supplied to the cavity (4) exceeds a predefined absorption threshold.

9. The Method of claim 8 further comprising performing a sweep, comprising a frequency sweep, a phase sweep, an amplitude sweep and/or impedance sweep (401, 402) for the cavity (4), the sweep (401, 402) comprising:
- supplying (401) radiation to the cavity (4) with at least one of the one or more operational parameters of the one or more radiation sources (7) being varied over time (t) within a respectively selected sweep range, the operational parameter selected from the group comprising: frequency (F), phase, amplitude, and impedance;
- continuously measuring (402) the amount of energy supplied to and reflected back from the cavity (4) over the sweep range;
- determining (403), for the at least one operational parameter (F) that is varied within the associated sweep range over time (t), an associated operational parameter value (F1) within the sweep range for which the power absorbed is maximized (K1) or for which the maximum power absorbed exceeds a predefined absorption threshold;
- applying (404) the determined at least one associated operational parameter value (F1) for heating the object (5) according to step i) (301) and/or step ii) (302).

10. The Method of claim 9, wherein the adapting of the one or more operational parameters (F) is carried out before step i) (301) and/or step ii) (302), preferably at a reduced power as compared to the power applied during the heating, and wherein, optionally, the adapting of the one or more operational parameters (F) is reiterated while heating the object (5) in steps i) (301) and ii) (302), and wherein, preferably, the heating of the object (5) is stopped (303, 502) if it is determined that the maximum of power absorbed in the cavity (4) relative to the radiation supplied to the cavity (4) is equal to or below the predefined absorption threshold.

11. The Method according to any of claims 1 to 10, wherein the predetermined first temperature limit (TL) is 60% to 90%, in particular 70% to 80% of the first target temperature (TT).

12. The Method according to any of claims 1 to 11, wherein the first (Tl) and/or second temperature value is measured via one or more contact-type or contactless temperature sensor units (8, 9, 10), wherein, preferably, at least one temperature sensor unit (8, 9, 10) comprises a temperature probe (9) having two or more temperature sensor elements (10) arranged at predefined mutual distances along a rod configured for insertion into and/or for application in or on at least one comestible object (5).

13. The Method according to any of claims 1 to 12, comprising:
- measuring and monitoring the first temperature value (T1) while operating the one or more radiation sources (7) for heating the object (5) according to step i) (301) and controlling the heating in step i) (302) in dependence of the measured first temperature value (T1), wherein if it is determined by comparing the measured first temperature value (T1) with the first temperature limit (TL) that the first temperature value (T1) reaches the first temperature limit (TL), operating the at least one radiation source (7) for heating the object (5) according to step ii) (302), and
- measuring the first temperature value (T1), calculating the first temperature difference (TD), and monitoring the first temperature difference (TD) while heating the object (5) according to step ii) (302), wherein if it is determined, based on the monitoring, that the first temperature difference (TD) is equal to or smaller than the predefined first temperature threshold (TH), suspending or stopping (303) the heating according to step iii) (302).

14. The Method of any of claims 1 to 13, comprising, at least in sections during step i) (301), heating the object (5) with a constant output power (P) of the one or more radiation sources (7), and/or, at least in sections during step i) (301), measuring the first temperature vale (T1) and controlling the one or more radiation sources (7) as a function of the measured first temperature value (T1) relative to the first temperature limit (TL) .

15. The Method of any of claims 1 to 14, comprising, during step ii) (302), determining the first temperature difference (TD), and controlling the one or more radiation sources (7) as a function of the determined first temperature difference (TD), wherein controlling the one or more radiation sources (7) preferably comprises controlling the output power (P) of the one or more radiation sources (7) as a function of the first temperature difference (TD), in particular such that the smaller the first temperature difference, the smaller the output power (P).

16. An Appliance (1), in particular a household appliance, for heating, in particular cooking, a comestible object (5), in particular a food object, in particular in an automated or semi-automated manner, comprising:
- a cavity (4) for receiving the comestible object (5);
- at least one radiation source (7) for supplying radiation in the radio-frequency or microwave range into the cavity (4) for dielectric heating of the object (5); and
- at least one control unit (11) coupled at least to the at least one radiation source (7), and configured for controlling the at least one radiation source (7) in accordance with a method according to at least one of claims 1 to 15.

17. The Appliance (1) according to claim 16, comprising one or more contactless and/or contact-type temperature sensor units (8, 9, 10), wherein at least one of the at least one control unit (11) and the one or more temperature sensor units (8, 9, 10) are or are configured for being interlinked for signal exchange, and wherein the at least one control unit (11) and temperature sensor unit (8, 9, 10) are configured for measuring and processing temperature values of the comestible object (5) at least during execution of the steps of a method according to at least one of claims 1 to 15.

18. A Computer-program product comprising instructions which, when executed by a computing device (11), cause the computing device (11) to carry out the steps of a method according to any of claims 1 to 15.
